# EUROPÄISCHE PATENTSCHRIFT

(11) **EP 2 956 288 B1**
(45) Veröffentlichungstag und Bekanntmachung des Hinweises auf die Patenterteilung: **29.03.2017**
(21) Anmeldenummer: 14703033.2
(22) Anmeldetag: 05.02.2014
(51) Int. Cl.: B29C 49/64, B65B 55/10, B67C 7/00, B29C 49/08, B67C 3/22, B29C 49/46, B29K 101/12, B29C 49/06

(54) **VERFAHREN ZUM VERPACKEN VON FLÜSSIGEN PRODUKTEN UNTER DRUCK IN FLASCHEN AUS KUNSTSTOFF ODER DGL. BEHÄLTER**
METHOD FOR PACKAGING LIQUID PRODUCTS UNDER PRESSURE IN PLASTIC BOTTLES OR SIMILIAR CONTAINERS
PROCÉDÉ DE CONDITIONNEMENT DE PRODUITS LIQUIDES SOUS PRESSION DANS DES BOUTEILLES EN MATIÈRE PLASTIQUE OU DES RÉCIPIENTS SIMILAIRES

(30) Priorität: 13.02.2013 DE 102013101407
(43) Veröffentlichungstag der Anmeldung: 23.12.2015
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/000314
(87) Internationale Veröffentlichungsnummer: WO 2014/124738

(56) Entgegenhaltungen:
- EP-A1- 1 944 151
- EP-A2- 2 447 038
- WO-A1-2007/019671
- DE-A1-102006 053 193
- DE-A1-102008 032 123

## Beschreibung

Die Erfindung bezieht sich auf ein Verfahren zum Verpacken von flüssigen Produkten.

Verfahren und entsprechende Anlagen, insbesondere auch in verblockter Form zum Verpacken von flüssigen Produkten unter Druck in aus thermoplastischem Kunststoff, nämlich aus PET (Polyethylenterephthalat) bestehenden Flaschen sind bekannt(DE 10 2006 053 193 A1), wobei bei diesen Verfahren und Anlagen die Flaschen in einer Blasformmaschine aus vorher sterilisierten bzw. desinfizierten sowie vorerhitzten Vorformlingen (Preforms) durch Blasformen hergestellt und dann in einer Füllmaschine oder in einem Füllaggregat der Anlage durch Druckfüllen mit dem karbonisierten, d.h. CO2-haltigen Produkt gefüllt und anschließend in einem Verschließaggregat der Anlage verschlossen werden. Hierbei ist es erforderlich, die die Blasformmaschine im heißen Zustand verlassenen Flaschen vor dem Druckfüllen insbesondere auch an ihrem Flaschenboden auf eine Temperatur deutlich unter 55°C abzukühlen. Hierfür werden die noch leeren Flaschen auf einer Transportstrecke zwischen der Blasformmaschine und der Füllmaschine an Behandlungspositionen mit einem Kühlmedium beaufschlagt. An weiteren Behandlungspositionen, die zusätzlich zu den Behandlungspositionen für das Kühlen der Flaschen an der Transportstrecke gesondert vorgesehen sind, erfolgt eine Sterilisation oder Desinfektion der Flaschen mit Wasserstoffperoxyd.

Speziell bei CO2-freien oder nur leicht karbonisierten und daher mikrobiologisch empfindlichen Produkten oder Getränken (z.B. Fruchtschorlen, karbonisierte Weinmischgetränke usw.) erfolgen zumindest das Befüllen und Verschließen der Flaschen in einen keimfreien oder sterilen Innenraum einer Einhausung (Hygieneeinhausung).

Eine Vorrichtung und ein Verfahren, dass neben der Kühlung der Behälter nach dem Streckblasvorgang zusätzlich auch noch eine Außendesinfektion der Behälter vorsieht, wurde durch die DE 10 2008 032 123 A1 vorgestellt. Mehr im Detail sieht diese Schrift vor, das zur Kühlung des Behälterbodens verwendete Kühlmediums gleichzeitig auch als Desinfektions-oder Sterilisationsmedium zu verwenden. EP 1 944 151 offenbart ein Verfahren zum Verpacken von flüssigen Produkten in Flaschen oder dgl. Behältern aus thermoplastischenKunststoff durch Herstellen der Behälter aus Vorformlingen durch Blasformen, durch Abkühlen der Behälter durch Beaufschlagung an ihrer Behälteraußenseite mit einem flüssigen Kühlmedium, durch Füllen der Behälter mit dem jeweiligen Produkt, und durch anschließendes Verschließen der gefüllten Behälter, wobei zum Kühlen der Behälter ein flüssigen Kühlmedium verwendeten wird. Aufgabe der Erfindung ist es, ein Verfahren zum Verpacken von flüssigen, unter Druck stehenden, d.h. von CO2-haltigen Produkten in Flaschen aufzuzeigen, welches bei hoher Leistung (Anzahl der hergestellten Verpackungseinheiten je Zeiteinheit) eine vereinfachte konstruktive Ausbildung, vor allem aber eine äußerst kompakte Bauform für die zum Durchführen des Verfahrens verwendete Anlage ermöglicht. Zur Lösung dieser Aufgabe ist ein Verfahren entsprechend dem Patentanspruch 1 ausgebildet.

Das erfindungsgemäße Verfahren ermöglicht bei hoher Betriebssicherheit ein Verpacken von flüssigen, und insbesondere unter Druck stehenden Produkten in aus thermoplastischem Kunststoff, insbesondere aus PET gefertigten Flaschen oder dgl. Behälter. Das Abkühlen der noch leeren Flaschen und bzw. Sterilisieren oder Desinfizieren dieser Flaschen nicht nur an ihrem Flaschenboden, sondern bevorzugt auch an ihrer gesamten Außenfläche, insbesondere auch in solchen Bereichen, an denen das Sterilisieren der Vorformlinge nicht wirksam ist, erfolgen zeitgleich in ein und demselben Verfahrensschritt bzw. an ein und derselben Arbeitsposition mit einem einzigen Medium, nämlich mit dem das Desinfektionsmittel enthaltenden flüssigen Kühlmedium, so dass sich hierdurch nicht nur eine verfahrensmäßige und konstruktive Vereinfachung ergibt, sondern vor allem auch die Möglichkeit einer für eine kompakte Bauweise der Anlage notwendige Verkürzung der Transport- und Behandlungsstrecke zwischen der Blasformmaschine und der Füllmaschine.

Als flüssiges Kühlmedium wird bevorzugt Wasser oder eine wässrige Lösung (beispielsweise steriles Wasser), vorzugsweise entionisiertes oder entsalztes Wasser (beispielsweise steriles Wasser) verwendet. Als Desinfektionsmittel eignet sich insbesondere Chlordioxid, welches in einer reduzierten, aber für die angestrebte Keimreduzierung ausreichenden Konzentration, beispielsweise in einer Konzentration von 0,5 - 3 ppm im flüssigen Kühlmedium enthalten ist. Das flüssige Kühlmedium wird fein zerstäubt von unten her auf die im Bereich ihrer Behältermündung hängend gehaltenen Behälter ausgebracht, beispielsweise auch als Aerosol unter zusätzlicher Verwendung eines sterilen und unter Druck stehenden gas- und/oder dampfförmigen Mediums (z.B. steriler Druckluft).

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichketen der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

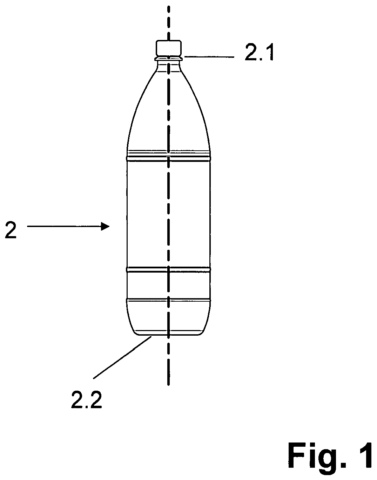

- Fig. 1: eine mit einem flüssigen Füllgut gefüllte und verschlossene Flasche (Verpackungseinheit) in Seitenansicht;
- Fig. 2: in schematischer Darstellung und in Draufsicht eine Anlage zum Herstellen der Verpackungseinheiten der Fig. 1;
- Fig. 3: in vereinfachter Darstellung einen Vertikalschnitt durch eine Transportstrecke der Anlage der Fig. 2;

Die in den Figuren allgemein mit 1 bezeichnete Anlage dient zum Herstellen von Verpackungseinheiten, die jeweils aus einer mit einem unter Druck stehenden, vorzugsweise CO2-haltigen Füllgut gefüllten und verschlossenen Flasche 2 aus thermoplastischem Kunststoff, vorzugsweise aus PET bestehen. Die Flaschen 2 werden in der Anlage 1 aus Vorformlingen 3 durch Blasformen hergestellt, anschließend mit dem Füllgut unter Druck gefüllt (Druckfüllen) und dann verschlossen. Die Anlage 1 weist hierfür folgende Komponenten auf:
- Eine Versorgungseinheit 4 zum Bereitstellen der Vorformlinge 3;
- eine Blasformmaschine 5 umlaufender Bauart, die eine dem Fachmann bekannte Ausbildung aufweist und der ein Ofen 6 mit Vorheizstrecke 7 zugeordnet ist;
- eine Füllmaschine 8 umlaufender Bauart, die eine dem Fachmann bekannte Ausbildung aufweist und an einem um eine vertikale Maschinenachse umlaufend angetriebenen Rotor eine Vielzahl von Füllstellen besitzt, sowie
- einen sich in Transportrichtung der Flaschen 2 durch die Anlage 1 an die Füllmaschine 8 anschließende Verschließmaschine 9 oder ein entsprechendes Verschließaggregat.

Zumindest der Teil oder Raum der Anlage 1, auf der die von der Versorgungseinheit 4 über eine Förderstrecke 4.1 zugeführten Vorformlinge 3 und dann die durch Blasformen aus diesen Vorformlingen 3 hergestellten Flaschen 2 bis an einen Auslass 10 der Anlage 1 bewegt werden, ist durch eine Einhausung 11 von der Umgebung getrennt und als steriler Raum oder Hygieneraum ausgeführt, der mit einem sterilen dampf- und/oder gasförmigen Medium mit leichtem Überdruck, vorzugsweise mit steriler Luft mit leichtem Überdruck beaufschlagt ist.

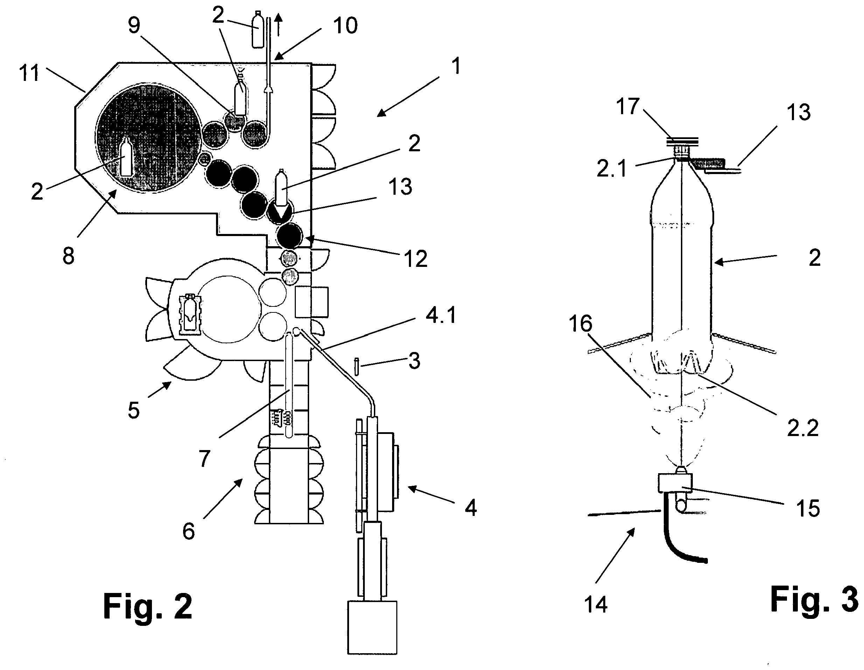

Im Einzelnen werden die Vorformlinge 3 über die Zuführung 4.1 der Vorheizstrecke 7 zugeführt, in der die Vorformlinge 3 vorerhitzt und in diesem Zustand einem Einlauf der Blasformmaschine 5 zugeführt. Vor ihrer Übergabe an die Blasformmaschine 5 werden die Vorformlinge 3 mit einem geeigneten gas- und/oder dampfförmigen und/oder flüssigen Medium sterilisiert. Die hergestellten leeren Flaschen 2 werden über eine Transportstrecke, die in der Fig. 2 ganz allgemein mit 12 bezeichnet ist und in der Praxis aber aus mehreren bezogen auf die Transportrichtung der Flaschen 2 aneinander anschließenden Transportsternen 13 besteht, von der Blasformmaschine 5 an die Füllmaschine 8 gefördert. An den Transportsternen 13 sind die Flaschen 2 jeweils im Bereich ihrer oberen Flaschenöffnung oder Mündung an einem Mündungsflansch 2.1 hängen gehalten, d.h. mit ihrer Flaschenachse in vertikaler oder im wesentlichen vertikaler Richtung orientiert.

Die durch Blasformen unter Erhitzen hergestellten leeren Flaschen 2 besitzen bei der Übergabe an die Transportstrecke 12 eine Temperatur von mindestens 75°C bis 80°C, und zwar insbesondere an ihrem eine vergrößerte Wandstärke aufweisenden Flaschenboden 2.2, so dass vor dem Druckfüllen in der Füllmaschine 8 auf jeden Fall ein Abkühlen der Flaschen 2 auf eine Temperatur notwendig ist, bei der der für die Flaschen verwendete thermoplastische Kunststoff eine ausreichende Stabilität aufweist, beispielsweise auf eine Temperatur von 55°C oder niedriger. Hierfür ist an der Transportstrecke 12 bzw- unter wenigstens einem Transportstern 13 und unterhalb der Bewegungsbahn der leeren Flaschen 2 wenigstens eine Sprüheinrichtung 14 mit zumindest einer Sprühdüse 15 vorgesehen, mit der ein flüssiges Kühlmedium mit einer Temperatur deutlich unter 55°C, beispielsweise mit einer Temperatur von maximal 20°C fein verteilt bzw. zerstäubt als Kühlmediumnebel 16 von unten her auf die Flaschen 2 und dabei insbesondere auch auf deren Flaschenböden 2.2 ausgebracht wird. Das Kühlmedium ist bevorzugt Wasser. Besitzt die Düsenanordnung mehrere in Transportrichtung der Flaschen 2 aufeinanderfolgende Sprühdüsen 15, so sind diese entlang der kreisbogenförmigen Transportstrecke des Transportsternes 13 gegeneinander versetzt. Die Sprühdüsen 15 können auch als Zerstäuberdüsen ausgeführt sein, denen einerseits das flüssige Kühlmedium (z.B. Wasser) und andererseits ein steriles gas- und/oder dampfförmige Medium unter Druck zugeführt wird, so dass sich der angestrebte, auf die Unterseite der Behälter 2 gerichtete Kühlmediumnebel 16 als Aerosol ergibt.

Die Besonderheit der Anlage 1 besteht darin, dass dem flüssigen Kühlmedium ein Desinfektionsmittel in Form von Chlordioxid beigemischt ist, und zwar in einer Konzentration, die ausreichend ist, um eine wirksame Sterilisation oder Desinfektion bzw. Entkeimung der Außenfläche der Flaschen 2 auch an solchen Bereichen zu erzielen, die bei der Sterilisation der Vorformlinge 3 nicht erfasst wurden. Es hat sich dabei gezeigt, dass eine Chlordioxid-Konzentration im flüssigen Kühlmedium im Bereich zwischen 0,5 ppm bis 10 ppm liegen sollte, wobei in der Regel der Bereich von 0,5 ppm bis 3 ppm ausreichend ist, um eine Sterilisation bzw. Desinfektion mit einer angestrebten Keimreduzierungsrate von Log 4-6 für die produktbezogenen Getränkeschädlinge zu erreichen, und zwar ohne dass eine feststellbare und insbesondere die Qualität des in die Flaschen 2 eingefüllten Füllgutes beeinträchtigende Beaufschlagung der Innenflächen der Flaschen 2 mit dem Desinfektionsmedium erfolgt. Grundsätzlich besteht auch die Möglichkeit, dass derjenige Transportstern 13, an dem die Flaschen 2 mit dem das Desinfektionsmittel enthaltenen Kühlmedium beaufschlagt werden so ausgeführt ist, dass dort ein Abdecken der jeweiligen Flaschenöffnung erfolgt, wie dies in der Fig. 3 mit dem Abdeckelement 17 angedeutet ist.

In einem verbesserten Verfahren bzw. abhängig von der Art der Mikroorganismen, ist es vorteilhaft, die Konzentration des Chlordioxid größer als 3 ppm zu wählen und bis auf 10 ppm zu erhöhen.

Wie die Fig. 2 zeigt, befindet sich die Sprüheinrichtung 14 bezogen auf die Transportrichtung der Transportstrecke 12 im Abstand von der Füllmaschine 8 und ihren Einlauf, d.h. in Transportrichtung der Flaschen 2 ist zwischen dem die Sprüheinrichtung 14 aufweisenden Transportstern 13 und dem Einlauf der Füllmaschine 8 wenigstens ein weiterer Transportstern 13 vorgesehen, d.h. bei der dargestellten Ausführungsform sind dort drei weitere Transportsterne 13 vorgesehen. Hierdurch sind auch bei hoher Leistung der Anlage 1 (Anzahl der geformten, gefüllten und verschlossenen Flaschen 2 je Zeiteinheit) Reste des auf die Flaschen 2 ausgebrachten Kühlmediums zumindest weitestgehend von den Flaschen 2 entfernt, insbesondere auch durch Abschleudern, d.h. durch die mit den umlaufenden Transportsternen 13 erzeugten Rotationskräfte, bevor die Flaschen 2 in die Füllmaschine 8 gelangen.

Durch die als fein zerstäubter Kühlmediumnebel 16 auf die Flaschen 2 ausgebrachte Kühlflüssigkeit ergibt sich eine Abkühlung auf großer Fläche, d.h. nicht nur des jeweiligen Flaschenbodens 2.2, sondern auch die gesamte oder im Wesentlichen die gesamte Außen- oder Mantelfläche der jeweiligen Flasche wird mit der Kühlflüssigkeit beaufschlagt.

Wird der jeweiligen Sprühdüse 15 nicht nur das Kühlmedium, sondern auch das unter Druck stehende gas- oder dampfförmige Medium, bevorzugt sterile Druckluft zugeführt, so ist hierdurch eine besonders feine Zerstäubung der Kühlmediums mit zusätzlicher Kühlwirkung durch Verdunsten erreichbar.

Durch das Beimischen des Desinfektionsmittels zu dem Kühlmedium ist es möglich, an ein und derselben Arbeitsposition und in ein und demselben Verfahrensschritt sowie mit ein und dem selben Medium sowohl das Abkühlen der Flaschen 2 als auch ein Sterilisieren bzw. Entkeimen der Flaschen 2 an ihrer Außenfläche zu erreichen, um so trotz einer angestrebten kompakten Ausbildung der Anlage 1 und deren Transportstrecke 12 ein Verschleppen von evtl. an der Außenfläche der Flaschen 2 haftenden Keimen in die Füllmaschine 8 und dabei in das Produkt führende Bereiche dieser Füllmaschine zu vermeiden.

Durch die beschriebene Ausbildung der Anlage 1 ist somit ein Verfahren zum Verpacken von flüssigen, unter Druck stehenden Produkten in Flaschen 2 in der Weise möglich, dass diese zunächst aus sterilisierten Vorformlingen 3 durch Blasformen geformt, dann mit einem flüssigen Kühlmedium gekühlt und dabei gleichzeitig sterilisiert und anschließend mit dem Füllgut unter Druck gefüllt und verschlossen werden.

Die Erfindung wurde voranstehend an einem Ausführungsbeispiel beschrieben. Es versteht sich, dass zahlreiche Änderungen sowie Abwandlungen möglich ist, ohne dass dadurch der der Erfindung zugrundeliegende Erfindungsgedanke verlassen wird.

In einem verbesserten Verfahren wird dem vorstehend beschriebenen flüssigen Kühlmittel zusätzlich zu dem Desinfektionsmedium wenigstens ein weiterer Zusatz zur Reduzierung der Oberflächenspannung des flüssigen Kühlmediums zugesetzt, beispielsweise ein Tensid. Hierdurch erfolgt eine bessere, flächigere Benetzung der Oberflächen und nachfolgend eine verstärkte, schneller Verdunstung und Abkühlung. Alternativ oder zusätzlich zu einem Tensid, kann auch mindestens ein leicht flüchtiger Zusatz zur Verbesserung der Abtrocknung der gekühlten und desinfizierten Behälter (2) vor dem Befüllen dem flüssigen Kühlmittel hinzugegeben werden, wie beispielsweise ein Alkohol (Methanol, Isopropanol, etc.). Alkohol wird im Sinne dieser Verfahrensvarianten nicht als Desinfektionsmittel verstanden, auch nicht in Konzentrationen eingesetzt, dass eine industriell relevante Abtötungsrate sichergestellt wäre.

Darüber hinaus könnte Chlordioxid bei einem alternativen Verfahren durch ein vergleichbar wirkendes Desinfektionsmittel ersetzt werden, wie bspw. Peressigsäure oder H2O2 (Wasserstoffperoxid), und dies im Gemisch mit einem der vorgenannten Ausführungsformen und/oder Verfahrensvarianten.

Eine alternative Ausführungsform sieht vor, dass im Falle von verminderten Hygieneanforderungen, vorgenanntes Kühlmittel fallweise keines der vorgenannten Desinfektionsmittel wie ClO2 (Chlordioxid), Peressigsäure, H2O2 (Wasserstoffperoxid) oder dergleichen aufweist, wobei als Verbesserung der Kühlung bzw. Kühlleistung ein Mittel zur Reduzierung der Oberflächenspannung des flüssigen Kühlmediums zugesetzt wird, beispielsweise ein Tensid, und wobei alternativ oder zusätzlich zu einem Tensid, auch ein oder mehrere leicht flüchtige Zusätze zur Verbesserung der Abtrocknung und Kühlung der Behälter (2) vor dem Befüllen dem flüssigen Kühlmittel (ohne Desinfektionsmittel) hinzugegeben werden, wie beispielsweise ein Alkohole (Methanol, Isopropanol, etc.). Alle sonstigen, vorstehenden Ausführungen zum Verfahren mit Desinfektionsmittel wie ClO2 (Chlordioxid), Peressigsäure, H2O2 (Wasserstoffperoxid) oder dergleichen gelten in analoger Weise.

Dabei können diese beiden Arten von Kühlmitteln (mit und ohne Desinfektionsmittel) bei einem Herstell- und Füllverfahren für Behälter alleinige eingesetzt werden oder alternativ, d.h. bedarfsweise zum Einsatz kommen.

### Bezugszeichenliste

- 1: Anlage
- 2: Flasche
- 2.1: Mündungsflansch
- 2.2: Flaschenboden
- 3: Vorformling
- 4: Versorgungseinheit
- 4.1: Zuführung
- 5: Blasformmaschine
- 6: Ofen
- 7: Vorheizstrecke
- 8: Füllmaschine
- 9: Verschließmaschine
- 10: Auslass der Anlage 1
- 11: Einhausung
- 12: Transportstrecke
- 13: Transportstern
- 14: Sprüheinrichtung
- 15: Sprühdüse
- 16: Kühlflüssigkeitsnebel oder Aerosol
- 17: Abdeckung

## Patentansprüche

1. Verfahren zum Verpacken von flüssigen, unter Druck stehenden Produkten in Flaschen oder dgl. Behältern (2) aus thermoplastischem Kunststoff, vorzugsweise aus PET, durch Herstellen der Behälter (2) aus sterilisierten Vorformlingen (3) durch Blasformen, durch Abkühlen der Behälter (2) durch Beaufschlagung an ihrer Behälteraußenseite mit einem flüssigen Kühlmedium, bevorzugt in Form von Wasser, durch Füllen der Behälter (2) mit dem jeweiligen Produkt, insbesondere Füllen unter Druck, und durch anschließendes Verschließen der gefüllten Behälter (2), wobei das zum Kühlen der Behälter (2) verwendete flüssige Kühlmedium wenigstens einen Zusatz zur Reduzierung der Oberflächenspannung des flüssigen Kühlmediums, beispielsweise ein Tensid und/oder einen Zusatz, beispielsweise Alkohol, zur Verbesserung der Abtrocknung der gekühlten Behälter (2) vor dem Befüllen enthält.

2. Verfahren nach Anspruch 1, **dadurch gekennzeichnet, dass** dem Kühlmedium als Sterilisation- und/oder Desinfektionsmedium Chlordioxid zugesetzt wird.

3. Verfahren nach Anspruch 2, **dadurch gekennzeichnet, dass** das Chlordioxid in dem flüssigen Kühlmedium in einer Konzentration von 0,5 - 10 ppm enthalten ist, insbesondere in einer Konzentration im Bereich von 0,5 - 3 ppm enthalten ist.

4. Verfahren nach einem der vorhergehenden Ansprüche, **dadurch gekennzeichnet, dass** als flüssiges Kühlmedium entsalztes und/oder entionisiertes, steriles Wasser verwendet wird.

5. Verfahren nach einem der vorhergehenden Ansprüche, **dadurch gekennzeichnet, dass** nach dem Beaufschlagen mit dem flüssigen Kühlmittel ein Abtrocknen der Behälter (2) durch Abschleudern von Kühlmittelresten durch Fliehkrafteinwirkung erfolgt.

6. Verfahren nach einem der vorhergehenden Ansprüche, **dadurch gekennzeichnet, dass** die Behälter (2) an ihrer gesamten Außenfläche einschl. des Flaschenbodens (2.2) mit dem flüssigen Kühlmedium beaufschlagt werden.

7. Verfahren nach einem der vorhergehenden Ansprüche, **dadurch gekennzeichnet, dass** das flüssige Kühlmedium über wenigstens eine Sprühdüse (15) einer Sprüheinrichtung (14) in fein zerstäubter Form oder als Aerosol (16) auf die Behälter (2) ausgebracht wird.

8. Verfahren nach einem der vorhergehenden Ansprüche, **dadurch gekennzeichnet, dass** die Beaufschlagung der an einem Transportelement (13) zwischen einer Blasformmaschine (5) und einer Füllmaschine (8) hängend gehaltenen Behälter (2) von einer unterhalb des Transportelementes (13) angeordneten Sprüheinrichtung (14) erfolgt.

9. Verfahren nach einem der vorhergehenden Ansprüche, **dadurch gekennzeichnet, dass** die Behälter (2) während der Beaufschlagung mit dem flüssigen Kühlmedium an ihrer Behälteröffnung abgedeckt sind.

## Claims

1. A method for packaging liquid products under pressure in bottles or similar containers (2) made of a thermoplastic plastic, preferably of PET, the method comprising the steps of:
producing the containers (2) from sterilised preforms (3) by blow moulding,
cooling the containers (2) by applying a liquid cooling medium to the outside of the containers, preferably in the form of water,
filling the containers (2) with the respective product, in particular filling under pressure, and
subsequently sealing the filled containers (2), wherein the liquid cooling medium used for cooling of the containers (2) contains at least one additive for reducing the surface tension of the liquid cooling medium, such as a tenside and/or an additive, such as alcohol, to improve the drying of the cooled containers (2) before being filled.

2. The method according to claim 1, **characterised in that** chlorine dioxide is added to the cooling medium as a sterilisation and/or disinfection medium.

3. The method according to claim 2, **characterised in that** the chlorine dioxide is contained in the liquid cooling medium in a concentration of 0.5 - 10 ppm, in particular in a concentration in the range from 0.5 - 3 ppm.

4. The method according to any one of the preceding claims, **characterised in that** demineralised and/or deionised sterile water is used as the liquid cooling medium.

5. The method according to any one of the preceding claims, **characterised in that**, after the application of the liquid cooling medium, drying of the containers (2) takes place by the centrifugal ejection of coolant residues by the effect of centrifugal force.

6. The method according to any one of the preceding claims, **characterised in that** the containers (2) are subjected to the liquid cooling medium over their entire outer surface, including the bottle base (2.2).

7. The method according to any one of the preceding claims, **characterised in that** the liquid cooling medium is applied onto the containers (2) by means of at least one spray nozzle (15) of a spray device (14), in fine atomised form or as an aerosol (16).

8. The method according to any one of the preceding claims, **characterised in that** the application takes place onto the containers (2), being held suspended between a blow moulding machine (5) and a filling machine (8), by a spraying device (14) arranged beneath the transport element (13).

9. The method according to any one of the preceding claims, **characterised in that** the containers (2) are covered at their container openings during the application of the liquid cooling medium.

## Revendications

1. Procédé servant à conditionner des produits liquides sous pression dans des bouteilles ou contenants (2) similaires composés d'une matière synthétique thermoplastique, de préférence composés de PET, en fabriquant les contenants (2) à partir d'ébauches (3) stérilisées par un moulage par soufflage, par refroidissement des contenants (2) en soumettant leur côté extérieur de contenant à l'action d'un agent de refroidissement liquide, de manière préférée sous la forme d'eau, en remplissant les contenants (2) du produit respectif, en particulier en les remplissant sous pression, puis en fermant les contenants (2) remplis, dans lequel l'agent de refroidissement liquide utilisé aux fins du refroidissement des contenants (2) contient au moins un additif servant à réduire la tension superficielle de l'agent de refroidissement liquide, par exemple un tensio-actif et/ou un additif, par exemple de l'alcool, servant à améliorer le séchage des contenants (2) refroidis avant le remplissage.

2. Procédé selon la revendication 1, **caractérisé en ce que** du dioxyde de chlore est ajouté à l'agent de refroidissement en tant qu'agent de stérilisation et/ou de désinfection.

3. Procédé selon la revendication 2, **caractérisé en ce que** le dioxyde de chlore dans l'agent de refroidissement liquide est contenu en une concentration de 0,5 - 10 ppm, en particulier est contenu en une concentration située dans la plage de 0,5 - 3 ppm.

4. Procédé selon l'une quelconque des revendications précédentes, **caractérisé en ce que** de l'eau stérile déminéralisée et/ou désionisée est utilisée en tant qu'agent de refroidissement liquide.

5. Procédé selon l'une quelconque des revendications précédentes, **caractérisé en ce que** les contenants (2) sont séchés par centrifugation des résidus de produit de refroidissement sous l'action de la force centrifuge après qu'ils ont été soumis à l'action du produit de refroidissement liquide.

6. Procédé selon l'une quelconque des revendications précédentes, **caractérisé en ce que** les contenants (2) sont soumis, au niveau de la totalité de leur surface extérieure y compris du fond de bouteille (2.2), à l'action d'un agent de refroidissement liquide.

7. Procédé selon l'une quelconque des revendications précédentes, **caractérisé en ce que** l'agent de refroidissement liquide est déversé sur les contenants (2) par l'intermédiaire au moins d'une buse de pulvérisation (15) d'un dispositif de pulvérisation (14) sous une forme finement vaporisée ou sous la forme d'un aérosol (16).

8. Procédé selon l'une quelconque des revendications précédentes, **caractérisé en ce que** les contenants (2) maintenus de manière suspendue au niveau d'un élément de transport (13) entre une machine de moulage par soufflage (5) et une machine de remplissage (8) sont soumis à l'action d'un dispositif de pulvérisation (14) disposé sous l'élément de transport (13).

9. Procédé selon l'une quelconque des revendications précédentes, **caractérisé en ce que** les contenants (2) sont recouverts au niveau de leur ouverture de contenant quand ils sont soumis à l'action de l'agent de refroidissement liquide.
